# EUROPEAN PATENT APPLICATION

(11) **EP 4 570 636 A1**
(43) Date of publication of application: **18.06.2025**
(21) Application number: 24219240.9
(22) Date of filing: 11.12.2024
(51) Int. Cl.: B62J 45/20, B62J 50/22, B62M 6/45, G07C 5/02

(54) **ELECTRIC BICYCLE CLASSIFICATION DISPLAY AND SWITCHING**

(30) Priority: 12.12.2023 US 202363609117 P
(71) Applicant: Specialized Bicycle Components, Inc., Morgan Hill, CA 95037 (US)
(72) Inventor: BLAIN, Christopher, Taichung (TW); OLSON, Paul, Sebastopol (US); DUEHRING, William, Laguna Hills (US)
(74) Representative: Forresters IP LLP

(57) **Abstract**

An electric bicycle (50) includes a frame (56), a front wheel (52) supporting the frame (56), a rear wheel (54) supporting the frame (56), a motor (60) coupled to the frame (56), a crankset (93) coupled to the motor (60), and a display device (102a) coupled to the frame (56). The display device (102a) is configured to display a performance attribute of the electric bicycle (50), and is further configured to display how long the electric bicycle (50) has been set to the performance attribute.

## Description

### CROSS-REFERENCE TO RELATED APPLICATIONS

This application claims priority to U.S. Provisional Application No. 63/609,117, filed December 12, 2023.

### BACKGROUND

The present disclosure relates generally to bicycles, and more specifically to electric bicycles.

Typically, bicycles are propelled by pedals mounted to a crankset. The cranksets transfer energy exerted on the pedals by a rider to advance the bicycle. The crankset typically includes one or more sprockets that engage a chain to transfer the rotary motion of the crankset to a rear wheel.

Electric bicycles, typically referred to as "e-bikes," include electrical components, such as electric motors, power supplies, controllers, data displays, brake lever switches, etc., which are electromechanically operated during use. For example, an electric motor may be operated to propel the electric bicycle. Alternatively, the electric motor may be operated to supplement mechanical and user applied input power from the crankshaft to propel the electric bicycle.

For safety and other reasons, use of electric bicycles is regulated by law and governmental agencies. For example, governmental agencies may regulate, and in many states within the United States do regulate, use of electric bicycles in accordance with a classification system. Electric bicycle regulation and classification systems may differ, but among many states in the United States, classification systems generally adhere to a three-class framework, where, for example, "Class 1" electric bicycles may be limited to a top speed of 20 miles per hour and require user pedaling prior to activation of the electric motor. In other words, Class 1 electric bicycles may be designated as pedal assist systems (PAS). Pedal assist systems may activate the electric motor upon user pedaling. Further, "Class 2" electric bicycles may be limited to a top speed of 20 miles per hour. Electric motors for Class 2 electric bicycles may be activated with or without simultaneous user pedaling. In other words, the electric motor may be throttled without the assist of user pedaling. And further, "Class 3" electric bicycles may be limited to a top speed of 28 miles per hour. Meanwhile, other classes or designations (e.g., "Class 4" electric bicycles, "Unrestricted" electric bicycles, "Private Land" electric bicycles, etc.) may be used now or in the future by governmental agencies and/or others to refer to electric bicycles that are not limited in their speed and/or that may not qualify as Class 1, 2, or 3 electric bicycles. Other performance attributes such as class or mode of operation may also be regulated by law and governmental agencies.

Depending on local laws, use of electric bicycles may be limited depending on the corresponding classification of the electric bicycle. For example, Class 3 electric bicycles may be restricted to use in bike-only road lanes and may not be legally usable on pedestrian trails, whereas Class 1 electric bicycles may be legally usable on the same multi-use trails.

### BRIEF DESCRIPTION OF THE DRAWINGS

Fig. 1A is a side view of an electric bicycle according to one example, including a human machine interface and a display for displaying the classification of the electric bicycle.
Fig. 1B is a side view of the electric bicycle of Fig. 1A, including different locations for the human machine interface and the display.
Fig. 2 is a block diagram of the electric bicycle of Fig. 1A.
Fig. 3 is a front view of the display from Fig. 1A.
Fig. 4 is an end view of the display of Fig. 3.
Fig. 5 is a perspective view of the display of Fig. 3.
Fig. 6 is a front view of the display from Fig. 1B.
Fig. 7 is an end view of the display of Fig. 6.
Fig. 8 is a perspective view of the display of Fig. 6.
Fig. 9 is an exploded view of the display, according to one example.
Fig. 10 is an exploded view of the display, according to another example.
Fig. 11 is a front view of the display, illustrating a message.
Fig. 12 is a perspective view of the display of Fig. 11.
Fig. 13 is a front view of the display, illustrating a different message.
Fig. 14 is a perspective view of the display of Fig. 13.
Fig. 15 is a flow chart illustrating a performance attribute change procedure.
Fig. 16A is a flow chart illustrating a class change test procedure.
Fig. 16B illustrates an exemplary successful feedback indicator.
FIG. 16C illustrates an exemplary error feedback indicator.
Fig. 17 is a flow chart illustrating a geographical performance attribute check procedure.
Fig. 18 is a flow chart illustrating a user dependent performance attribute change procedure.
Fig. 19 is a flow chart illustrating a third party notification procedure.

### DETAILED DESCRIPTION

Before any examples are explained in detail, it is to be understood that the disclosure is not limited in its application to the details of construction and the arrangement of components set forth in the following description or illustrated in the following drawings. The disclosure is capable of other examples and of being practiced or of being carried out in various ways.

In one example, the present disclosure provides an electric bicycle having a frame, a front wheel supporting the frame, a rear wheel supporting the frame, a motor coupled to the frame, a crankset coupled to the motor, and a display device coupled to the frame. The display device is configured to display a performance attribute of the electric bicycle, and is further configured to display how long the electric bicycle has been set to the performance attribute.

In another example, an electric bicycle includes a frame, a front wheel supporting the frame, a rear wheel supporting the frame, a motor coupled to the frame, a crankset coupled to the motor, and a display device coupled to the frame, the display device being configured to display a performance attribute of the electric bicycle. The electric bicycle further includes a human machine interface coupled to the frame and to the display device, the human machine interface being configured to be used to change the performance attribute. Changing of the performance attribute requires a restart of the electric bicycle, and changing of the performance attribute is required within a predetermined period of time after the restart of the electric bicycle.

In another example, a method of changing a performance attribute of an electric bicycle is provided. The electric bicycle includes a frame, a front wheel supporting the frame, a rear wheel supporting the frame, a motor coupled to the frame, a crankset coupled to the motor, a display device coupled to the frame, and a human machine interface coupled to the frame and to the display device. The method includes using the human machine interface to display a first performance attribute of the electric bicycle on the display device, turning power off to the electric bicycle after displaying the first performance attribute, turning the power back on to the electric bicycle after turning the power off, and using the human machine interface to change the first performance attribute to a second performance attribute after turning the power back on. The step of changing the first performance attribute to the second performance attribute is configured to only be permitted after the step of turning the power back on, and is configured to only be permitted within a predetermined time period after the step of turning the power back on. The step of changing the first performance attribute to the second performance attribute is configured to cause the display device to display the second performance attribute.

In another example, an electric bicycle includes a frame, a front wheel supporting the frame, a rear wheel supporting the frame, a motor coupled to the frame, a crankset coupled to the motor, and a display device coupled to the frame, the display device being configured to display a performance attribute of the electric bicycle. The electric bicycle also includes a human machine interface coupled to the frame and to the display device. The human machine interface is configured to be used to change the performance attribute. At least one of the human machine interface or the display device is configured to display feedback confirming that a change in the performance attribute was successful.

In another example, an electric bicycle includes a frame, a front wheel supporting the frame, a rear wheel supporting the frame, a motor coupled to the frame, a crankset coupled to the motor, and a display device coupled to the frame, the display device being configured to display a performance attribute of the electric bicycle. The electric bicycle also includes a human machine interface coupled to the frame and to the display device. The human machine interface is configured to be used to change the performance attribute. At least one of the human machine interface or the display device is configured to display an error code if the performance attribute fails to display on the display device or if the display device fails to display a currently selected performance attribute.

In another example, an electric bicycle includes a frame, a front wheel supporting the frame, a rear wheel supporting the frame, a motor coupled to the frame, a crankset coupled to the motor, and a display device coupled to the frame, the display device being configured to display a performance attribute of the electric bicycle. The electric bicycle also includes a human machine interface coupled to the frame and to the display device. The human machine interface is configured to be used to change the performance attribute. At least one of the human machine interface or the display device is configured to notify a user whether the performance attribute is a legal performance attribute for a geographical location of the electric bicycle.

In another example, an electric bicycle includes a frame, a front wheel supporting the frame, a rear wheel supporting the frame, a motor coupled to the frame, a crankset coupled to the motor, and a display device coupled to the frame, the display device being configured to display a performance attribute of the electric bicycle. The electric bicycle also includes a human machine interface coupled to the frame and to the display device. The human machine interface is configured to be used to change the performance attribute. The human machine interface is configured to permit only a select group of users to change the performance attribute.

In another example, an electric bicycle includes a frame, a front wheel supporting the frame, a rear wheel supporting the frame, a motor coupled to the frame, a crankset coupled to the motor, and a display device coupled to the frame, the display device being configured to display a performance attribute of the electric bicycle. The electric bicycle also includes a human machine interface coupled to the frame and to the display device. The human machine interface is configured to be used to change the performance attribute. The human machine interface is configured to notify a third party when the performance attribute has been changed or selected.

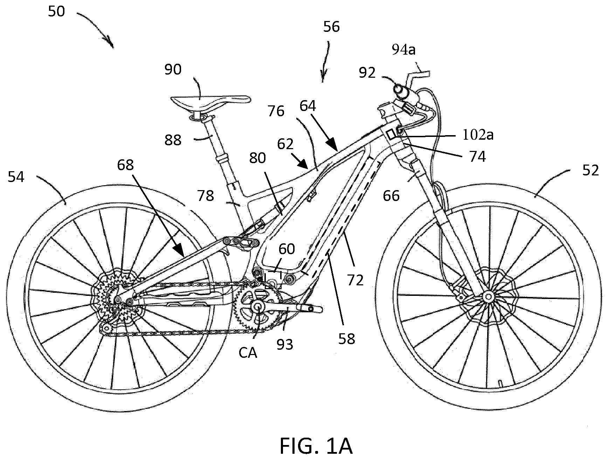

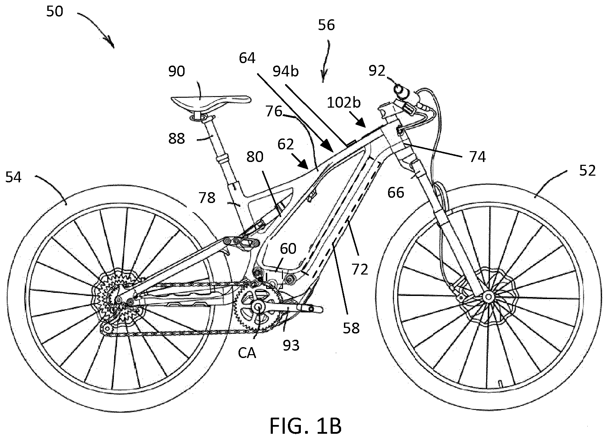

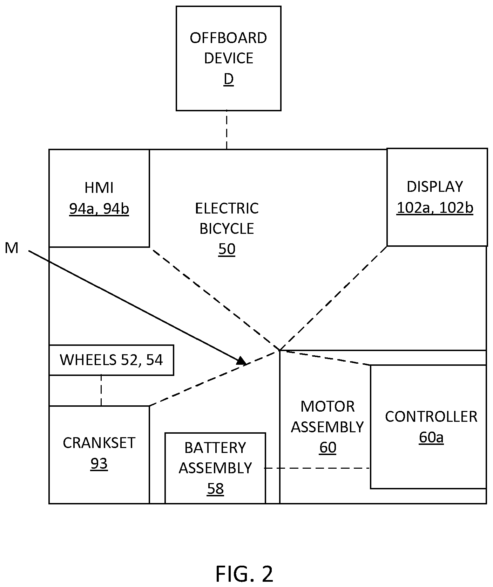

Figs. 1A, 1B, and 2 illustrate an electric bicycle 50 having a front wheel 52, a rear wheel 54, and a frame assembly 56 coupled to and supported on the front wheel 52 and rear wheel 54. The frame assembly 56 may include a battery assembly 58, a motor assembly 60, and a frame structure 62. Further, frame assembly 56 may include a crankset 93. The crankset 93 may be coupled to at least one of the front wheel 52 or the rear wheel 54, such as, for example, by a drive transmission system comprising one or more chains or belts for transmitting user input power from the crankset 93 to drive at least one of the wheels 52, 54.

In some examples, the electric bicycle 50 may not use a chain or belt. For example, the crankset 93 may include, or otherwise define, a pedal generator that provides resistance (e.g., constant resistance) and provides electricity to one or both of the battery assembly 58 and the motor assembly 60 upon receipt of user input power. In such a drive transmission system, the motor assembly 60 may then provide output power to drive at least one of the wheels 52, 54. In some examples, rather than the crankset 93 driving a chain or belt to drive a wheel 52, 54, the chain or belt may be replaced by a shaft including meshing teeth, where the meshing teeth are driven by the crankset 93 and drive the wheel 52, 54. The shaft may be configured as a telescopic shaft, and the shaft may be movable to drive different sets of driven teeth ultimately coupled to the wheel 52, 54 in a manner similar to traditional chain drive transmission systems. In some examples, the crankset 93 does not transmit power. Rather, the crankset 93 only provides a signal that contains speed and/or position information, which may then be used to control the output power from the motor assembly 60.

In some examples, the frame structure 62 may include a main frame 64, a front fork 66 rotationally coupled to and supported on a front part of the main frame 64, and a rear frame 68 coupled (e.g., pivotally coupled) to and supported on a rear part of the main frame 64. The main frame 64 may include multiple hollow tubes, such as, for example, a down tube 72, a head tube 74, a top tube 76, a seat tube 78, and/or a side tube 80. Other examples of frame structures 62 may include other numbers and arrangements of components. For example, the frame structure 62 may not include a side tube 80, and/or may include a rear frame 68 that is fixed to the main frame 64.

The motor assembly 60 may include an electric motor. In some examples, the electric motor may be a mid-drive electric motor or a hub-drive electric motor. In further examples, the electric motor may be configured to drive the crankset 93, such as, for example, when the electric motor is a mid-drive electric motor. In these examples, the crankset 93 may be coupled to the motor assembly 60 and at least one of the front wheel 52 or the rear wheel 54. In some examples, the motor assembly 60 may be mounted to a bottom shell of the frame assembly 56. In other examples, the motor assembly 60 may be located elsewhere (e.g., within the bounds of the front wheel 52 or the rear wheel 54), such as, for example, when the electric motor is a hub-drive electric motor. For example, the motor assembly 60 may be positioned at any location where it is suitably positioned to drive the electric bicycle 50.

The electric bicycle 50 may further include a dropper seat post 88 secured to the seat tube 78, a supporting a saddle 90, and/or handlebars 92 coupled to the front fork 66 to facilitate steering of the electric bicycle 50. In some embodiments, the dropper seat post 88 may be omitted.

The crankset 93 may be rotationally supported by the motor assembly 60 and the frame structure 62 to permit pedaling of the electric bicycle 50. The crankset 93 may be rotated about a crank axis CA. In some examples, such as when the electric motor of motor assembly 60 is a mid-drive electric motor, the crankset 93 may function in conjunction with the motor assembly 60 to provide a pedal assist system (PAS) capable of transmitting force to drive at least one of the wheels 52, 54 (e.g., the rear wheel 54) from the user through the crankset 93 and/or from force generated by the motor assembly 60 and ultimately from chemical energy of the battery assembly 58. Operation of (i.e., performance attributes of) the motor assembly 60 and the crankset 93 may be switched as described in detail below with regard to operational classes. For example, the crankset 93 may function without input from the motor assembly 60. In other instances, the motor assembly 60 and the crankset 93 may each simultaneously transmit power to advance the electric bicycle 50. Additional components such as brakes, a cassette, front and/or rear derailleurs for slowing the electric bicycle 50, and/or mechanical advantage of the electric bicycle 50, and the like may also be provided. In still other examples, the motor assembly 60 and not the crankset 93 may transmit power to advance the electric bicycle 50.

Exemplary performance attributes of the motor assembly 60 include but are not limited to motor classification (e.g., Class 1-4 as described above), maximum speed of the electric bicycle 50, and/or maximum power output of the motor assembly 60. Maximum speed of the electric bicycle 50 may refer to speed of the electric bicycle 50 during receipt of power from the battery assembly 58 and the motor assembly 60. The electric bicycle 50 may be capable of traveling faster than the maximum speed in the event the battery assembly 58 and the motor assembly 60 do not provide motive force to the crankset 93, but the user-applied force to the crankset 93 causes the electric bicycle 50 to travel above the maximum speed. Maximum power output of the motor assembly 60 may refer to either a theoretical maximum power output rating of the motor assembly (e.g., a motor assembly 60 which can physically only provide a particular output power (e.g., 750 Watts)) or to a limited maximum power output rating of the motor assembly (e.g., a motor assembly 60 which can physically provide a particular output power (e.g., 750 Watts), but is throttled to provide only a lesser output power (e.g., 600 Watts)). Other performance attributes are possible.

For example, performance attributes relating to an assist level of the motor assembly 60 may also be changed. Assist level relates to an amount of power matching of the motor assembly 60 in comparison to the user-applied power to the crankset 93. For example, if a rider applies 100 Watts to the crankset 93, and the assist level is set to 100%, the motor assembly 60 may also apply 100 Watts to the crankset 93, and a total of 200 Watts may advance the electric bicycle 50. If a rider applies 100 Watts to the crankset 93, and the assist level is set to 50%, the motor assembly 60 may apply 50 Watts to the crankset 93, and a total of 150 Watts may advance the electric bicycle 50. Assist level may be adjustable via user input depending on desired acceleration, battery conservation, and the like.

In Fig. 1A, a human-machine-interface 94a (i.e., HMI 94a), such as a button, a plurality of buttons, a touchscreen, or the like is mounted to provide a system for the user to communicate with the electric bicycle 50. The HMI 94a may be a structural component which receives tactile input from a user to send a signal to the electric bicycle 50 relating to the tactile input. In other examples, types of input other than tactile input may be utilized by the HMI 94a. The HMI 94a may be configured to receive audible input from a user. The HMI 94a may be arranged such that a user may manually interact with the HMI 94a to change a performance attribute of the electric bicycle 50. In some examples, a user may move or actuate a component connected to the HMI 94a (e.g., left hand switch gear) to change the performance attribute.

For example, the HMI 94a may be configured to receive telecommunications from a user via an offboard device D (Fig. 2). The user may be the rider of the electric bicycle 50 and/or another user located remotely from the electric bicycle 50. The HMI 94a may provide a system by which to gather input from the user. The HMI 94a may include a wireless communication interface for wirelessly communicating with other offboard devices D (e.g., mobile phones, smart watches, heart rate monitors, personal computers, servers, etc.) and may transmit information such as speed, battery charge, or selected mode (e.g., classification) using one or more protocols, like ANT+^{™} or Bluetooth^{™}. The HMI 94a may include wireless interface communications which be used to tune, diagnose, or update the HMI 94a, the electric bicycle 50, or one or more other components assisted with the electric bicycle 50, as well as collect and remotely store data gathered by the HMI 94a.

As illustrated in Fig. 1A, the HMI 94a may be coupled to the handlebar 92. Positioning of the HMI 94a may be selected to promote easy visibility and/or access for adjustment of settings of the electric bicycle 50 during riding thereof or while the electric bicycle 50 is stationary.

With reference to Figs. 1A and 2, the HMI 94a may be coupled to an electric motor (e.g., the above-referenced electric motor of motor assembly 60) and battery controller 60a within the motor assembly 60. The HMI 94a may also be coupled to a display 102a (illustrated schematically in Fig. 1A). The display 102a (otherwise referred to as a display device) may be configured to display a performance attribute (e.g., original performance attribute) of the electric bicycle 50, a second (e.g., changed) performance attribute of the electric bicycle 50, and/or a change (an indicator indicating change from the original performance attribute to the changed performance attribute) in the performance attribute of the electric bicycle 50. In the illustrated example, the display 102a is coupled to the head tube 74 (e.g., along a side of the head tube 74). The display 102a, however, may face forward, rearward, or at other angles, or be positioned elsewhere than that illustrated.

The electric motor and battery controller 60a may be supported by the frame structure 62 and be part of and/or coupled to any of a variety of components including the battery assembly 58, the motor assembly 60, the HMI 94a, and the display 102a. The electric motor and battery controller 60a may include a processor and memory configured to store computer instructions configured to run on the processor. In the Fig. 1A example, the display 102a is supported by the frame structure 62 by the handlebars 92.

In Fig. 1B, a human-machine-interface 94b (i.e., HMI 94b) similar to the HMI 94a is mounted to the frame structure 62 in a direction facing generally upwardly from the top tube 76. In Fig. 1B, a display 102b (otherwise referred to as a display device), similar to the display 102a, is mounted to the frame structure 62 in a direction facing generally upwardly from the top tube 76. In this arrangement, a user seated on the saddle 90 may view both the HMI 94b and the display 102b and interact with the HMI 94b.

In some examples, the HMIs 94a, 94b may be located adjacent to and/or integrated with existing HMIs related to adjusting the aforementioned assist level of the electric bicycle 50.

Exact locations of the HMIs 94a, 94b and the displays 102a, 102b may depend on type of user input, or visual preference, or prioritizing riders seated on the saddle 90 or other servicers or personnel not seated on the saddle 90. For example, the display 102a may be located on the top tube 76, and/or the display 102b may be located on the head tube 74. The HMI 94a may be located on the handlebar 92, and/or the HMI 94b may be located on the top tube 76. Any location of the displays 102a, 102b, and any location of the HMIs 94a, 94b, is possible. For example, the displays 102a, 102b and/or the HMIs 94a, 94b may be located along a different portion of the frame structure 62 than that illustrated, or may be located on a portion of the electric bicycle 50 other than the frame structure 62. Accordingly, the displays 102a, 102 and the HMIs 94a, 94b may be positioned anywhere on the electric bicycle 50. Locations of the displays 102a, 102b may be used with any locations of the HMIs 94a, 94b. Power and/or signal cable routing may also be contributing factors in selecting a location for the HMIs 94a, 94b and the displays 102a, 102b. Additionally, in some examples the selection of location for the displays 102, 102b and the HMIs 94a, 94b may be determined for example by any current regulations or rules related to the use of displays on an electric bicycle.

Fig. 2 schematically illustrates components of the electric bicycle 50 and the offboard device D. The battery controller 60a is illustrated as a component of the motor assembly 60. Functionality of the battery controller 60a may be performed entirely by the battery controller 60a and/or at least partially by one or more offboard devices D. The motor assembly 60 further includes mechanical couplings to the crankset 93 as illustrated by dashed line M.

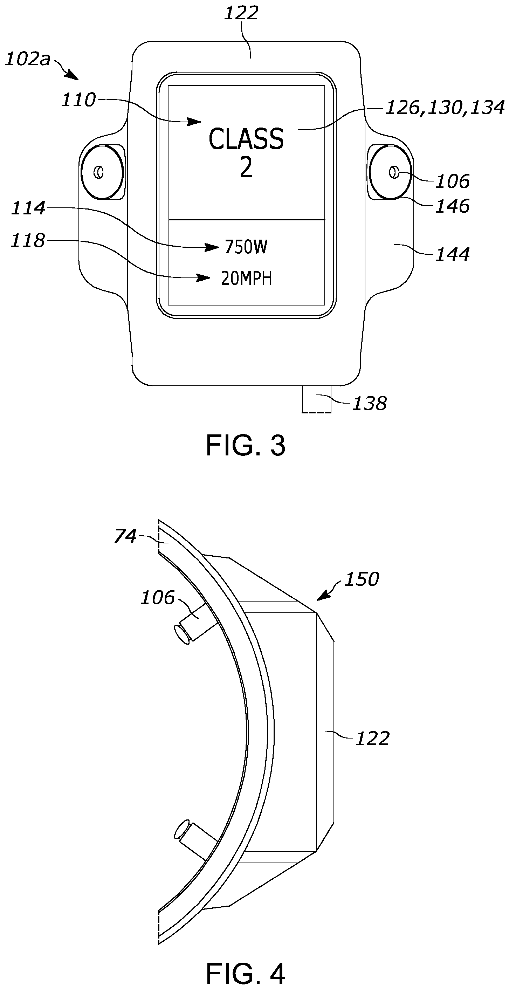

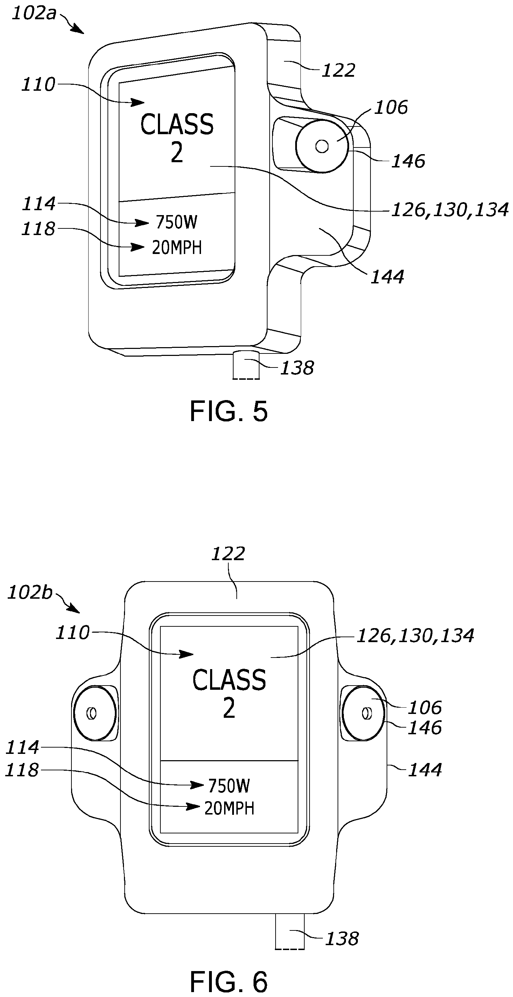

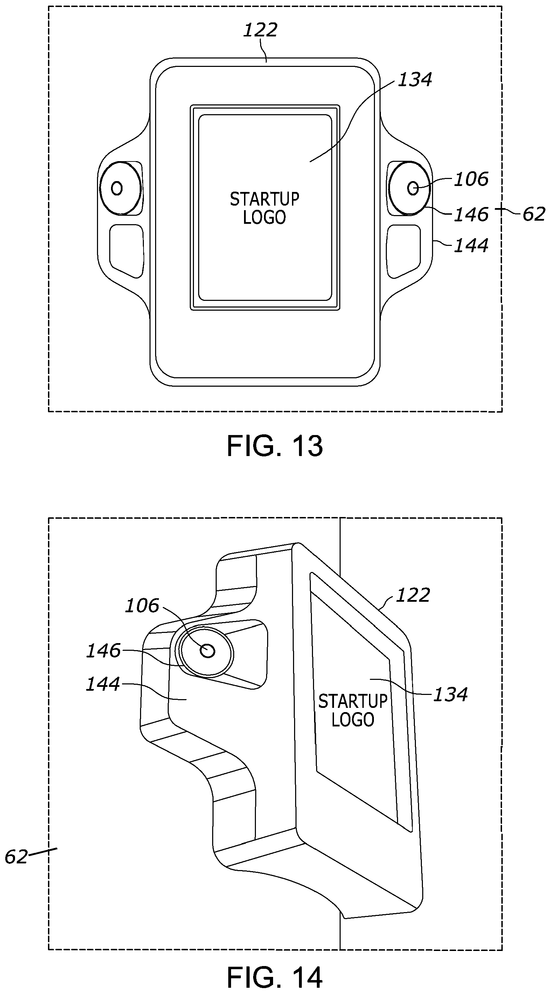

The displays 102a, 102b may each include a plurality of components, and each may be secured or mounted for example to the frame structure 62 or the handlebars 92. As illustrated in Figs. 3-14, the displays 102a, 102b may be fixedly secured or mounted to different locations on the electric bicycle 50 (e.g., on the frame structure 62). For example, as illustrated in Figs. 3-8, rivets 106 may fixedly secure the display 102a, 102b to the frame structure 62 (e.g., to the head tube 74 or the top tube 76). In other examples, different connectors such as and without limitation, weld beads, may fixedly secure the displays 102a, 102b to the frame structure 62. These and other types of connectors are envisioned to be more difficult for a rider to remove than other types of connectors such as a fastener or screw, although in some examples fasteners may be provided. Use of a rivet, or weld bead, may help ensure to law enforcement personnel that the rider does not deliberately disconnect or ruin the display 102a, 102b after being pulled over but before inspection of the display 102a, 102b, and an indicator 110 of the display indicating class. The displays 102a, 102b may further include any number of additional indicators 114, 118, to indicate, for example, a rated power output of the motor assembly 60 (indicator 114) and/or a maximum speed of the selected class (indicator 118).

The displays 102a, 102b may include a plurality of components. The displays 102a, 102b may include an outer housing 122 having a window 126, a transparent cover 130 aligned with the window 126, a display module 134 with a wire 138, and/or an inner housing 142. The display module 134 may be configured to generate the aforementioned indicators 110, 114, 118 upon receipt of a corresponding signal from the electric motor and battery controller 60a via the wire 138. In other examples, the wire 138 may be replaced by wireless power and signal transmission structure (e.g., a Bluetooth' connection). The inner housing 142 may be positioned between the display module 134 and the frame structure 62. In some examples, the wire 138 may pass into an opening in the frame structure 62 (e.g., in the head tube 74 or the top tube 76).

The outer housing 122 may be positioned outboard of the display module 134 relative to the frame structure 62, and may be shaped to at least partially wrap around the frame structure 62. In the illustrated example, the outer housing 122 includes rivet arms 144 with rivet holes 146. The rivet holes 146 may be configured to receive the rivets 106 described above to permanently secure the displays 102a, 102b to the frame structure 62. One rivet 106 is positioned on either lateral side of the display module 134, and each rivet 106 passes through a corresponding rivet hole 146 in the rivet arm 144. Other arrangements of rivets 106 are possible.

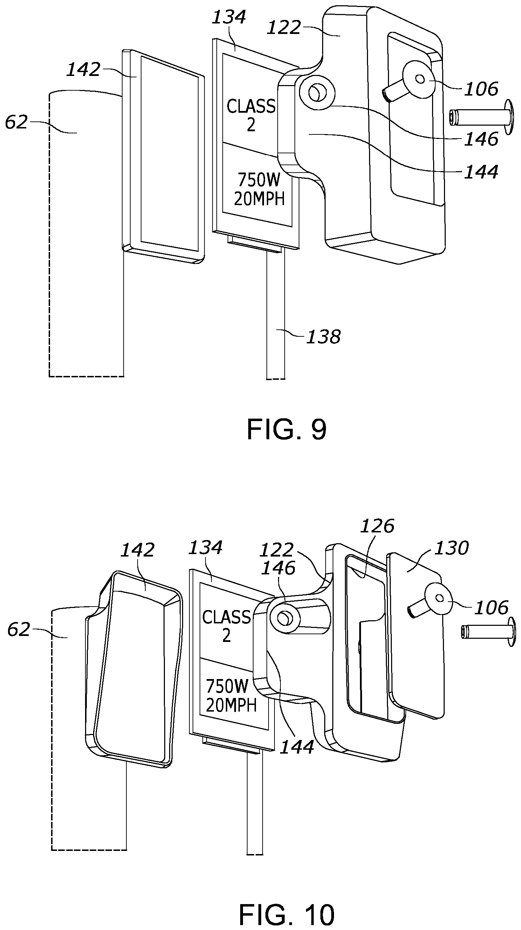

In the example illustrated in Fig. 10, the outer housing 122 is opaque, and the cover 130 is transparent. In other examples such as in Fig. 9, the outer housing 122 and transparent cover 130 may be joined as a one-piece transparent component to permit visibility of the display module 134.

The display module 134 itself may include e-ink, a liquid-crystal display, light emitting diode (LED) display, organic light emitting diode display (OLED), inorganic light emitting diode display (iLED), a light array, or the like. The display module 134 may be configured to illuminate light in patters to indicate to a rider or other personnel a status of the electric bicycle 50. The display module 134 may optionally flash in sequences. Selection of display technology may depend on at least the desired image quality, refresh rate, and/or battery usage requirements.

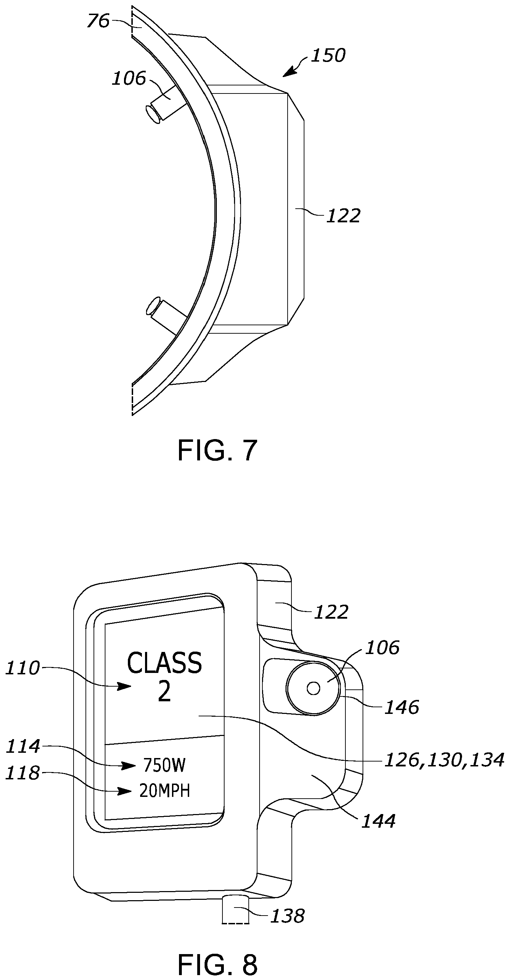

An outer profile 150 of the displays 102a, 102b, and more specifically, the outer housing 122, may be designed depending on desired appearance of the display 102a, 102b considering drag of the electric bicycle 50. As best illustrated in Figs. 4 and 7, the outer profile 150 may at least partially describe a profile of the display 102a, 102b in a direction perpendicular to the elongated extent of the hollow frame structure 62.

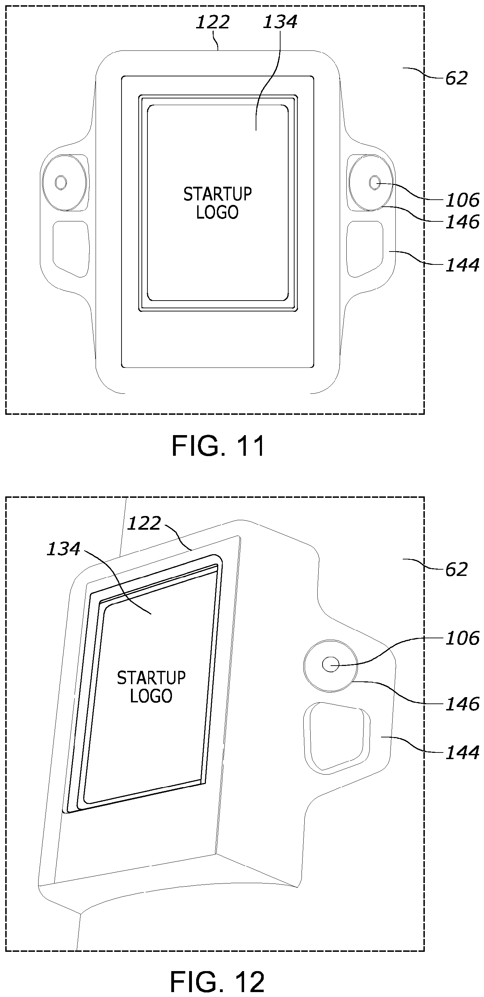

As illustrated in Figs. 11-14, the wire 138 may be routed within the outer housing 122 into the hollow frame structure 62 (e.g., through an opening in the head tube 74 or the top tube 76). Alternately, as illustrated in Figs. 3, 5, 6, and 8, the wire 138 may be routed from the display module 134.

The electric bicycle 50 may further include other on-board sensors and/or other accessories such as a speedometer, an odometer and/or a power meter. In some examples, the speedometer and odometer may be a combined system which functions in conjunction with the motor assembly 60. While an additional Hall effect sensor and magnet may be required, current from the Hall effect sensor may be supplied to the electric motor and battery controller 60a. Similarly, an additional sensor such as a strain gauge on the crankset 93 or another component of the electric bicycle 50 may be provided to gather data indicative of user input power. Instantaneous, ride, lifetime, or other speedometer, odometer, and/or power data of the electric bicycle 50 may be presented on the display 102a, 102b or any other dedicated display.

The HMIs 94a, 94b may be operated in conjunction with the displays 102a, 102b in different cycles to begin operation of the electric bicycle 50, change classification of the electric bicycle 50, and more. Even before a boot sequence of the electric bicycle 50, so long as a first boot sequence has occurred, if the display module 134 includes e-ink, the e-ink from the most recent use of the electric bicycle 50 may still be visible. E-ink displays are capable of displaying accurate information without drawing battery for a duration of days, weeks, or even months. In other words, e-ink displays function as "always-on" displays which allow visibility of the display even after typical power supply is disconnected or interrupted. The HMIs 94a, 94b may be actuated to boot the electric bicycle 50 from a sleeping or OFF state in which the battery assembly 58 does not supply power to the motor assembly 60 to an awake state in which the battery assembly 58 is capable of supplying power to the motor assembly 60 and/or other components of the electric bicycle 50.

The display 102a, 102b may function as an "always-on" display (e.g., with the use of E-ink as described above) in which the display 102a, 102b is configured to continuously display the performance attribute for an extended amount time (e.g., for at least one hour, at least one day, at least one week, at least one month, an undetermined time, and/or indefinitely). The display 102a, 102b may be coupled to a display power source which may be the battery assembly 58, a dedicated display battery, or any other power source. The display 102a, 102b may be actuated to display any data (e.g., a performance attribute of the electric bicycle 50) upon receipt of a control signal from the electric motor and battery controller 60a or the second device D and upon receiving sufficient power from the display power source.

As an "always-on" display, the display 102a, 102b may continue to display data (e.g., performance attribute) without requiring further power input from the display power source or control input signals. The "always-on" nature of the display may satisfy laws requiring certain information to be permanently displayed on the electric bicycle 50. In some examples, the display power source is configured to selectively provide electricity to the display 102a, 102b, and the display 102a, 102b is configured to hold a display state displaying the performance attribute after the display 102, 102b is not receiving electricity from the display power source.

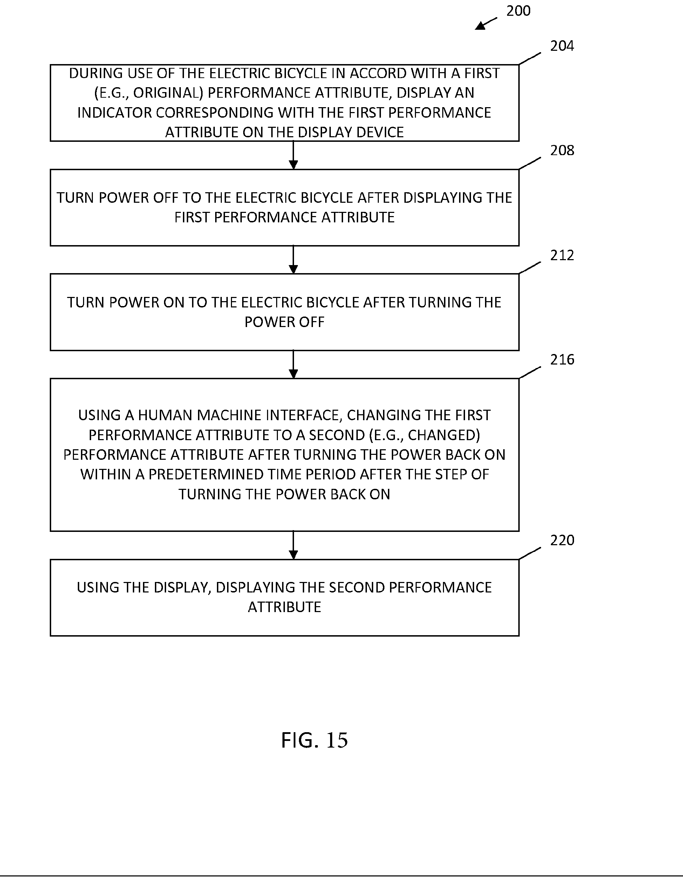

Fig. 15 illustrates a performance attribute change procedure 200 used to change a performance attribute of the electric bicycle 50. The performance attribute which is changed may include but is not limited to classification of the electric bicycle 50, mode of the electric bicycle 50, and the like. At step 204, the electric bicycle 50 may be operated in accordance with a first performance attribute (e.g., Class 1) and the display 102a, 102b displays an indicator 110 indicative of the first performance attribute of the electric bicycle 50 (e.g., "Class 1") on the display 102a, 102b. At step 208, the electric bicycle 50 is powered OFF after displaying the indicator 110 indicative of the first performance attribute of the electric bicycle 50. After step 208, the indicator 110 may continue to provide a visible display to a rider or other personnel even after turning the electric bicycle 50 OFF. The displays 102a, 102b may continue to display the indicator 110 indicative of the performance attribute for a period of time (e.g., one day, one week, one month) after the display has been powered OFF. The period of time may or may not be predetermined.

At step 212, power to the electric bicycle 50 is turned ON after being turned OFF. In other words, step 212 occurs after step 208. At step 216, the HMI 94a,94b is used (e.g., actuated) to change the first performance attribute (e.g., Class 1) to a second performance attribute (e.g., Class 2). Switching from the first performance attribute to the second performance attribute may be restricted within a predetermined time period after the step 212 of turning the power back ON. The predetermined time period may be hard coded into the electric bicycle 50, for example, the electric motor and battery controller 60a of the motor assembly 60. The predetermined time period may be any suitable time period to allow time for a user to determine whether switching class or any other performance attribute of the electric bicycle 50 is necessary. For example, the predetermined time period may be 5 seconds, 10 seconds, 15 seconds, 30 seconds, or the like.

If the HMI 94a, 94b is actuated to change the first (e.g., original) performance attribute to a second (e.g., changed) performance attribute within the predetermined time period, the performance attribute of the electric bicycle 50 may be changed, and subsequent operation of the electric bicycle 50 may occur in accordance with the second (e.g., changed) performance attribute (e.g., Class 2 operation). At step 220, the performance attribute of the electric bicycle 50 is changed, and the display 102a, 102b may be operated to display an indicator (e.g., "Class 2") indicative of the second (e.g., changed) performance attribute. In short, the electric bicycle 50 may require a "power cycle" or "restart" prior to changing the performance attribute. Restart of the electric bicycle 50 may include a restart of the HMI 94a, 94b.

Additionally or alternatively, the display 102a, 102b may be configured to display how long the electric bicycle 50 has been set to the (e.g., original) performance attribute. The display 102a, 102b may be refreshed at various intervals to provide context to the rider regarding the duration of time that the electric bicycle 50 has been set to (e.g., configured for use in accordance with) the performance attribute. Some displays 102a, 102b (e.g., LCD displays) may include fixed refresh rates (e.g., 30 Hz, 60 Hz, 120 Hz, etc.). Other displays 102a, 102b (e.g., e-ink displays) may include stepped refresh intervals or "time stamps" indicating the most recent threshold duration of time since a performance attribute change or power cycle. For example, an e-ink display may be updated at durations of time such as 10 seconds, 30 seconds, 3 minutes, 5 minutes, 15 minutes, 30 minutes, 1 hour, etc. from changing the performance attribute or from turning the electric bicycle 50 ON. Other stepped refresh intervals are possible. Such stepped refresh intervals may further conserve battery life of the electric bicycle 50.

Additionally or alternatively, the display 102a, 102b may be configured to display a duration of traveling distance (e.g., miles, kilometers) over which the electric bicycle 50 has been set to the (e.g., original) performance attribute. Data relating to the duration of traveling distance may be supplied from the odometer.

Additionally or alternatively, the display 102a, 102b may be operated to display a duration of time that the electric bicycle 50 has been operated at any given performance attribute.

Additionally or alternatively, the display 102a, 102b, may be operated to display an indicator indicating the instantaneous (e.g., the changed) performance attribute, or indicate the most recent past (e.g., the original) performance attribute. Operation (e.g., coding what is displayed, and how and when the display may be adjusted) of the display 102a, 102b, including but not limited to displaying performance attributes of the electric bicycle 50, may be specifically designed to satisfy laws requiring certain information (e.g., class, etc.) to be displayed on the electric bicycle 50. Accordingly, the displays 102a, 102b may overall satisfy laws requiring certain information to be displayed on the electric bicycle 50 (i.e., class, etc.) This may provide further context to law enforcement personnel or others regarding whether the electric bicycle 50 was switched from a more active class (e.g., Class 3) to a more passive (e.g., user-driven) class (e.g., Class 1), or vice versa.

Such performance change procedures 200 may deter riders from quickly switching performance attributes (e.g., classes) of the electric bicycle 50 to conceal previously used performance attributes of the electric bicycle 50 in the event of a traffic stop from law enforcement personnel. Law enforcement personnel can easily view the display 102a, 102b, and determine whether performance attributes (e.g., Class) of the electric bicycle 50 were switched.

Additionally or alternatively, data from the power meter may also be compiled by the electric motor and battery controller 60a to determine whether the user-applied power caused the speed of the electric bicycle 50 to exceed, for example, the maximum speed of the electric bicycle 50 in the selected Class, and/or a speed limit of the road or trail.

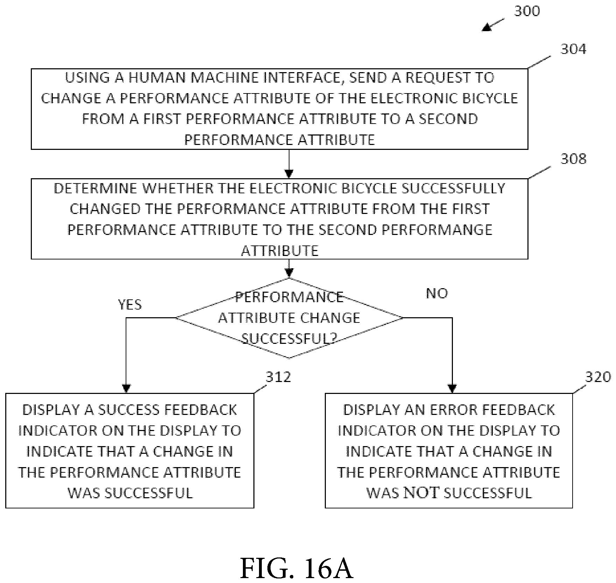

With reference to Fig. 16A, the HMI 94a, 94b, the motor and battery controller 60a of the motor assembly 60, and the display 102a, 102b may be configured to operate in accordance with a performance attribute change test procedure 300 to indicate to a user that a performance attribute was successfully changed. The successful performance attribute change procedure 300 includes a first step 304 in which the HMI 94a, 94b sends a request to change a performance attribute (e.g., Class) of the electric bicycle 50 from a first performance attribute (e.g., Class 1) to a second performance attribute (e.g., Class 2) different than the first performance attribute. The motor and battery controller 60a of the motor assembly 60 is instructed and attempts to change the performance attribute to the second performance attribute. The motor and battery controller 60a of the motor assembly 60 then, at step 308, executes at least one test to determine whether the electric bicycle 50 successfully changed the performance attribute thereof from the first performance attribute (e.g., Class 1) to the second performance attribute (e.g., Class 2).

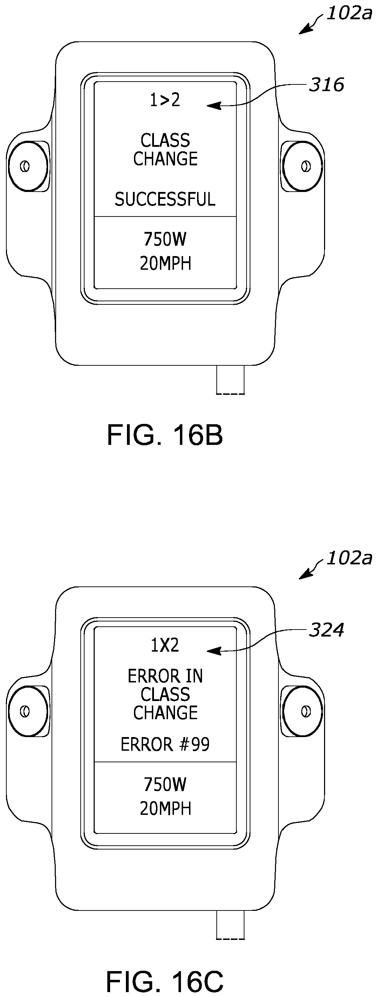

Upon determining that the performance attribute has been successfully changed (e.g., the second performance attribute is applied to subsequent operation of the electric bicycle 50), the HMI 94a, 9b and/or the display 102a, 102b displays a success feedback indicator 316. As illustrated in Fig. 16B, the success feedback indicator 316 may include text that the "class change" was "successful" and/or provide light and/or sound to indicate success. The success feedback indicator 316 may further indicate from which class (e.g., class 1) the electric bicycle 50 was changed (indicated by "1"), and to which class (e.g., class 2, indicated by "2") the electric bicycle 50 currently operates in. After a predetermined amount of time (e.g., 15 seconds, 30 seconds, etc.), the success feedback indicator 316 may be replaced by the generic performance attribute indicator 110. However, other visible, audible, and/or tactile indicia can be suitable for this purpose.

Upon determining that the performance attribute was not successfully changed (e.g., the second performance attribute was not applied for subsequent operation of the electric bicycle 50), the display 102a, 102b may display an error feedback indicator 324. As illustrated in Fig. 16C, the error feedback indicator can include text that there was an "error in class change", and can further indicate an error number (e.g., #99). The error number may be indicative of what caused the electric bicycle 50 to fail in changing performance attributes. For example, error number (e.g., #99) may be correlated to an error in which at least one of the HMI 94a, 94b and the display 102a, 102b is disconnected or not communicating correctly with the electric motor and battery controller 60a within the motor assembly 60 (e.g., if the wire 138 was deliberately or accidentally severed).

Such an error feedback indicator 324 may be beneficial both as a mechanism to pinpoint electromechanical issues of the electric bicycle 50 and/or as an indicator to law enforcement personnel that a rider has deliberately severed a connection to the display 102a, 102b in attempt to hide accurate performance attributes of the electric bicycle 50 prior to a traffic stop. The error feedback indicator 324 may further be configured to display evidence of any other type of rider tampering by, for example, displaying a dedicated tampering error message and/or temporarily or permanently rendering the electric bicycle 50 inoperable. Display of other tampering errors may be prompted by, for example, tampering with the display 102a, 102b, disconnection between any of the battery assembly 58, the electric motor and battery controller 60a, and/or whichever wheel or wheels 52, 54 are driven by the motor assembly 60. In another example, if data relating to previous performance attributes of the electric bicycle 50 is saved to the electric motor and battery controller 60a, the user's second device D, or any other storage medium, and the data is erased by a rider, a tampering error may be displayed on the display 102a, 102b for a predetermined or undisclosed amount of time. Various other tampering error indicators and tampering error prompts are possible.

The electric bicycle 50 may be configured for use with a global positioning system ("GPS") or other geographical based system onboard or mounted to the electric bicycle 50 or onboard another device carried by the rider (e.g., a smart watch, mobile phone, etc.) to determine the location of the rider and/or electric bicycle 50. The device may include an application configured to gather and compile data relating to geographical performance attribute limitations and also to correlate the actual geolocation of the electric bicycle 50 to legal performance attributes in accord with the actual geolocation. The electric bicycle 50 may be configured to communicate with the GPS system, and the display 102a, 102b may be configured to notify the user whether a performance attribute (e.g., Class) is a legal attribute for a geographical location of the electric bicycle 50.

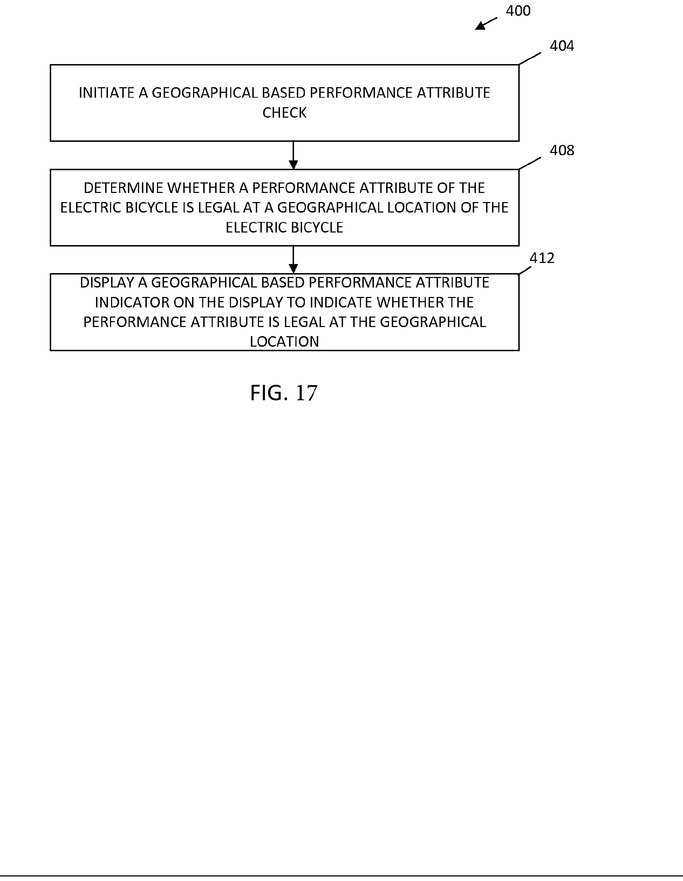

Fig. 17 illustrates a geographical performance attribute check procedure 400. At step 404, a geographical based performance attribute check is initiated. The geographical based performance attribute check may be initiated at start-up of the electric bicycle 50, at any interval throughout use of the electric bicycle 50 (e.g., in "real time", which may include gathering geographical data at relatively high rates such as once per second, once per 10 seconds or the like), and/or as requested by the user via input from the HMI 94a, 94b.

Once initiated, at step 408, the motor and battery controller 60a of the motor assembly 60 and/or another controller (e.g., of another device) may determine whether a performance attribute (e.g., a current class) of the electric bicycle 50 is legal at a geographical location of at least one of the electric bicycle 50, the user, and/or the offboard GPS device. Once determined whether the performance attribute is legal or not, the display 102a, 102b may display a geographical performance attribute indicator to indicate whether the performance attribute is legal at the geographical location.

In some examples, the HMI 94a, 94b or the display 102a, 102b may notify the user of the legality of the performance attribute via a notification to the device (e.g., via a mobile phone application). In some examples, when the electric bicycle 50 determines that the performance attribute is illegal at a given geographical location, the motor and battery controller 60a of the motor assembly 60 may display an indicator requesting that the user change the performance attribute to a legal performance attribute and/or automatically change the performance attribute automatically to a legal performance attribute.

Additionally or alternatively, the geographical based system may provide a notification on the display 102a, 102b or any other device when entering a new geographic territory such as and without limitation, when crossing state lines or trail boundaries. Such an indicator may be helpful when accurate legal data for any given jurisdiction is unknown.

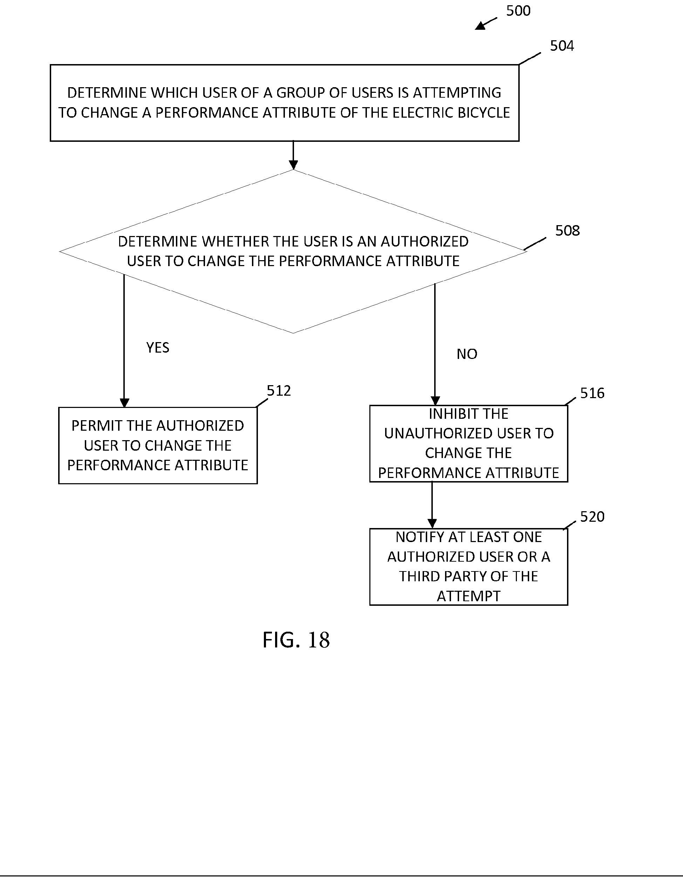

Fig. 18 illustrates a user-authorization check procedure 500 for restricting change of performance attributes of the electric bicycle 50 to authorized users. At step 500, a user attempts to change a performance attribute of the electric bicycle 50 by interaction of the HMI 94a, 94b or interaction with a second device D (e.g., mobile phone) in communication with the electric bicycle 50. At step 508, a controller of at least one of the motor assembly 60 and/or the second device D, for example by a mobile telephone application, determines whether the user attempting to change the performance attribute (e.g., an original class, class 1) to a changed performance attribute (e.g., class 2) is attempting to change a performance attribute of the electric bicycle 50.

As illustrated by step 512, if the user is authorized to change the performance attribute, the change may be permitted. As illustrated by step 516, if the user is an unauthorized user for making the attempted change in performance attribute, the change may be inhibited. If desired, as illustrated by step 520, a notification may be sent to an authorized user or a third party (e.g., law enforcement personnel) that the performance attribute was attempted to be changed by an unauthorized user. Such a control scheme may be beneficial as, for example, a parental control and/or anti-theft control mechanism.

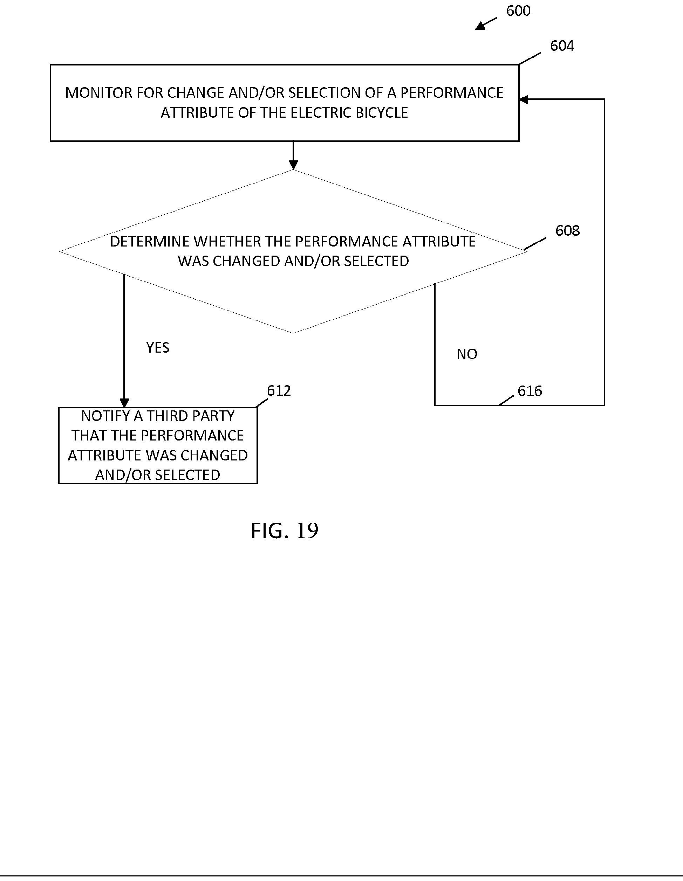

In a broader sense, the HMI 94a, 94b may be configured to notify any third party when any one or more performance attribute(s) has (have) been changed or selected. This notification need not require user determination and/or authorization as described above with regard to the user authorization check procedure 500. Fig. 19 illustrates such a notification procedure 600. The notification procedure 600 includes, at step 604, monitoring the electric bicycle 50 to determine whether a performance attribute was changed (e.g., class 1 to class 2), or a performance attribute is selected (e.g., class 2 selected for operation).

At step 608, the notification procedure 600 determines whether the performance attribute was changed and/or selected. If the performance attribute was changed and/or selected, at step 612, a third party may be notified that the performance attribute was changed and/or selected. If the performance attribute was not changed and/or selected, arrow 616 indicates looping back to the monitoring step 604. In some examples, the notification procedure 600 may be carried out in real time during use of the electric bicycle 50. In other examples, a request may be sent from a second device D remote of the electric bicycle 50 such as a remote user's (different from the rider of the electric bicycle 50) mobile telephone to initiate monitoring step 604.

Operating procedures of the electric bicycle 50 may be easily adjusted in response to changes in laws and/or technologies. The user's second device D (e.g., mobile phone) may communicate with the electric bicycle 50, or the electric bicycle 50 may itself may communicate with a different second device D (e.g., a remote server) to update labeling procedures and processes in a firmware update. Such a firmware update may change operation of the electric bicycle 50 to allow or disallow the electric bicycle 50 to operate in any given different performance attribute (e.g., class). For example, if a classification (e.g., "Class 4") for unrestricted use of electric bicycles 50 is codified in a given jurisdiction, the electric bicycle 50 and/or the user's second device D can be reprogrammed such that operation of the electric motor and the battery controller 60a is capable of operation meeting the new legal requirements for that jurisdiction. Any performance attribute may be checked and updated for subsequent operation of the electric bicycle 50 in this manner. In addition to class codification, if one or more moped classes are instituted by law, the electric bicycle 50 may check for that codification, adjust operation of the electric bicycle 50, and indicate to the user that the electric bicycle 50 is configured for use in any corresponding class.

The display 102a, 102b may be configured to display information relating to the firmware update. For example, a firmware update indicator may indicate that operation of the electric bicycle 50 is configured for use with a different performance attribute. For example, the display 102a, 102b may illustrate "Operation in Class 4 Instituted per Law #11" to the user upon startup of the electric bicycle 50 that a new law has been placed in effect, and the electric bicycle 50 has been updated for operation in cooperation with the new law.

Such firmware update checks may be regularly checked at hard-coded intervals (e.g., once a week, once a month) upon startup or during use of the electric bicycle 50. Alternately, such firmware update checks may be conducted at any interval of starting or use of the electric bicycle 50 (e.g., every instance of turning the electric bicycle 50 ON, every other instance of turning the electric bicycle 50 ON, every instance of entering a new jurisdiction, etc.).

### REPRESENTATIVE FEATURES

Representative features are set out in the following clauses, which stand alone or may be combined, in any combination, with one or more features disclosed in the text and/or drawings of the specification.

Clause 1. An electric bicycle comprising:
a frame;
a front wheel supporting the frame;
a rear wheel supporting the frame;
a motor coupled to the frame;
a crankset coupled to the motor; and
a display device coupled to the frame, wherein the display device is configured to display a performance attribute of the electric bicycle, and is further configured to display how long the electric bicycle has been set to the performance attribute.

Clause 2. The electric bicycle of clause 1, wherein the display device is configured to display a duration of time during which the electric bicycle has been set to the performance attribute.

Clause 3. The electric bicycle of clause 1 or clause 2, wherein the display device is configured to display a duration of traveling distance over which the electric bicycle has been set to the performance attribute.

Clause 4. The electric bicycle of any of the preceding clauses, wherein the performance attribute is at least one of a motor classification, maximum speed, or maximum power of the electric bicycle.

Clause 5. The electric bicycle of any of the preceding clauses, wherein the display device is configured to be powered on and off, and wherein the display device is configured to continue to display the performance attribute for at least one hour of time after the display has been powered off.

Clause 6. The electric bicycle of any of the preceding clauses, wherein the frame includes a head tube, wherein the display device is coupled to the head tube.

Clause 7. The electric bicycle of any of the preceding clauses, wherein the display device is configured to be wirelessly connected to a mobile phone.

Clause 8. The electric bicycle of any of the preceding clauses, further comprising a human machine interface coupled to the frame, wherein the human machine interface is coupled to the display device and is configured to control what is displayed on the display device, wherein the human machine interface is arranged such that a user may manually interact with the human machine interface to change the performance attribute of the electric bicycle, and wherein the display device is then configured to display the change in the performance attribute.

Clause 9. The electric bicycle of any of the preceding clauses, wherein the display device is coupled to a display power source configured to selectively provide electricity to the display device, and the display device is configured to hold a display state displaying the performance attribute after the display device is not receiving electricity from the display power source.

Clause 10. An electric bicycle comprising:
a frame;
a front wheel supporting the frame;
a rear wheel supporting the frame;
a motor coupled to the frame;
a crankset coupled to the motor; and
a display device coupled to the frame, wherein the display device is configured to display a performance attribute of the electric bicycle;
a human machine interface coupled to the frame and to the display device, wherein the human machine interface is configured to be used to change the performance attribute;
wherein changing the performance attribute requires a restart of the electric bicycle, and wherein changing the performance attribute requires changing the performance attribute within a predetermined period of time after the restart of the electric bicycle.

Clause 11. The electric bicycle of clause 10, wherein the restart of the bicycle includes a restart of the display device.

Clause 12. The electric bicycle of clause 10 or clause 11, wherein the predetermined period of time is within 15 seconds after the restart of the electric bicycle.

Clause 13. The electric bicycle of any of clauses 10-12, wherein display device is configured to display the changed performance attribute.

Clause 14. A method of changing a performance attribute of an electric bicycle, the electric bicycle having a frame, a front wheel supporting the frame, a rear wheel supporting the frame, a motor coupled to the frame, a crankset coupled to the motor, a display device coupled to the frame, and a human machine interface coupled to the frame and to the display device, the method comprising:
using the human machine interface to display a first performance attribute of the electric bicycle on the display device;
turning power off to the electric bicycle after displaying the first performance attribute;
turning the power back on to the electric bicycle after turning the power off;
using the human machine interface to change the first performance attribute to a second performance attribute after turning the power back on, wherein the step of changing the first performance attribute to the second performance attribute is configured to only be permitted after the step of turning the power back on, and is configured to only be permitted within a predetermined time period after the step of turning the power back on, and wherein the step of changing the first performance attribute to the second performance attribute is configured to cause the display device to display the second performance attribute.

Clause 15. An electric bicycle comprising:
a frame;
a front wheel supporting the frame;
a rear wheel supporting the frame;
a motor coupled to the frame;
a crankset coupled to the motor; and
a display device coupled to the frame, wherein the display device is configured to display a performance attribute of the electric bicycle;
a human machine interface coupled to the frame and to the display device, wherein the human machine interface is configured to be used to change the performance attribute;
wherein at least one of the human machine interface or the display device is configured to display feedback confirming that a change in the performance attribute was successful.

Clause 16. The electric bicycle of clause 15, wherein the feedback includes at least one of a sound or display of light, indicating that the performance attribute change was successful.

Clause 17. An electric bicycle comprising:
a frame;
a front wheel supporting the frame;
a rear wheel supporting the frame;
a motor coupled to the frame;
a crankset coupled to the motor; and
a display device coupled to the frame, wherein the display device is configured to display a performance attribute of the electric bicycle;
a human machine interface coupled to the frame and to the display, wherein the human machine interface is configured to be used to change the performance attribute;
wherein at least one of the human machine interface or the display device is configured to display an error code if the performance attribute fails to display on the display device or if the display device fails to display a currently selected performance attribute.

Clause 18. An electric bicycle comprising:
a frame;
a front wheel supporting the frame;
a rear wheel supporting the frame;
a motor coupled to the frame;
a crankset coupled to the motor; and
a display device coupled to the frame, wherein the display device is configured to display a performance attribute of the electric bicycle;
a human machine interface coupled to the frame and to the display, wherein the human machine interface is configured to be used to change the performance attribute;
wherein at least one of the human machine interface or the display device is configured to notify a user whether the performance attribute is a legal performance attribute for a geographical location of the electric bicycle.

Clause 19. The electric bicycle of clause 18, wherein the at least one of the human machine interface or the display device is configured to notify the user at a start-up of the electric bicycle.

Clause 20. The electric bicycle of clause 18 or clause 19, wherein the at least one of the human machine interface or the display device is configured to notify the user in real time as the electric bicycle is being used.

Clause 21. The electric bicycle of any of clauses 18-20, wherein the at least one of the human machine interface or the display device is configured to notify the user via a mobile phone application.

Clause 22. An electric bicycle comprising:
a frame;
a front wheel supporting the frame;
a rear wheel supporting the frame;
a motor coupled to the frame;
a crankset coupled to the motor; and
a display device coupled to the frame, wherein the display device is configured to display a performance attribute of the electric bicycle;
a human machine interface coupled to the frame and to the display, wherein the human machine interface is configured to be used to change the performance attribute;
wherein the human machine interface is configured to permit only a select group of users to change the performance attribute.

Clause 23. The electric bicycle of clause 22, wherein the human machine interface is configured to communicate with a mobile phone application to determine the select group of users.

Clause 24. An electric bicycle comprising:
a frame;
a front wheel supporting the frame;
a rear wheel supporting the frame;
a motor coupled to the frame;
a crankset coupled to the motor; and
a display device coupled to the frame, wherein the display device is configured to display a performance attribute of the electric bicycle;
a human machine interface coupled to the frame and to the display, wherein the human machine interface is configured to be used to change the performance attribute;
wherein the human machine interface is configured to notify a third party when the performance attribute has been changed or selected.

Various modifications to the implementations described in this disclosure may be readily apparent to those skilled in the art, and the generic principles defined herein may be applied to other implementations without departing from the spirit or scope of this disclosure. Thus, the claims are not intended to be limited to the implementations shown herein, but are to be accorded the widest scope consistent with this disclosure, the principles and the novel features disclosed herein.

Certain features that are described in this specification in the context of separate implementations also can be implemented in combination in a single implementation. Conversely, various features that are described in the context of a single implementation also can be implemented in multiple implementations separately or in any suitable sub combination. Moreover, although features may be described above as acting in certain combinations and even initially claimed as such, one or more features from a claimed combination can in some cases be excised from the combination, and the claimed combination may be directed to a sub combination or variation of a sub combination.

The various illustrative logical blocks, modules, and algorithm steps described in connection with the examples disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

The various illustrative logical blocks and modules described in connection with the embodiments disclosed herein can be implemented or performed by a machine, such as a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor can be a microprocessor, but in the alternative, the processor can be a controller, microcontroller, or state machine, combinations of the same, or the like. A processor can also be implemented as a combination of computing devices, for example, a combination of a DSP and a microprocessor, a plurality of microprocessors, one or more microprocessors in conjunction with a DSP core, or any other such configuration.

The steps of a method, process, or algorithm described in connection with the embodiments disclosed herein can be embodied directly in hardware, in a software module executed by a processor, or in a combination of the two. A software module can reside in RAM memory, flash memory, ROM memory, EPROM memory, EEPROM memory, registers, hard disk, a removable disk, a CD-ROM, or any other form of computer-readable storage medium known in the art. An example storage medium can be connected to the processor such that the processor can read information from, and write information to, the storage medium. In the alternative, the storage medium can be integral to the processor. The processor and the storage medium can reside in an ASIC. The ASIC can reside in a user terminal. In the alternative, the processor and the storage medium can reside as discrete components in a user terminal.

While the above detailed description has shown, described, and pointed out novel features as applied to various embodiments, it will be understood that various omissions, substitutions, and changes in the form and details of the devices or algorithms illustrated can be made without departing from the spirit of the disclosure. As will be recognized, certain embodiments described herein can be embodied within a form that does not provide all of the features and benefits set forth herein, as some features can be used or practiced separately from others. All changes which come within the meaning and range of equivalency of the claims are to be embraced within their scope.

Various features of the disclosure are set forth in the following claims.

## Claims

1. An electric bicycle comprising:
a frame;
a front wheel supporting the frame;
a rear wheel supporting the frame;
a motor coupled to the frame;
a crankset coupled to the motor; and
a display device coupled to the frame, wherein the display device is configured to display a performance attribute of the electric bicycle, and is further configured to display how long the electric bicycle has been set to the performance attribute.

2. The electric bicycle of claim 1, wherein the display device is configured to display a duration of time during which the electric bicycle has been set to the performance attribute.

3. The electric bicycle of claim 1 or claim 2, wherein the display device is configured to display a duration of traveling distance over which the electric bicycle has been set to the performance attribute.

4. The electric bicycle of any of the preceding claims, wherein the performance attribute is at least one of a motor classification, maximum speed, or maximum power of the electric bicycle.

5. The electric bicycle of any of the preceding claims, wherein the display device is configured to be powered on and off, and wherein the display device is configured to continue to display the performance attribute for at least one hour of time after the display has been powered off.

6. The electric bicycle of any of the preceding claims, wherein the frame includes a head tube, wherein the display device is coupled to the head tube.

7. The electric bicycle of any of the preceding claims, wherein the display device is coupled to a display power source configured to selectively provide electricity to the display device, and the display device is configured to hold a display state displaying the performance attribute after the display device is not receiving electricity from the display power source.

8. The electric bicycle of any of the preceding claims, further comprising a human machine interface coupled to the frame and to the display device.

9. The electric bicycle of any of claim 8, wherein the human machine interface is configured to control what is displayed on the display device, wherein the human machine interface is arranged such that a user may manually interact with the human machine interface to change the performance attribute of the electric bicycle, and wherein the display device is then configured to display the change in the performance attribute.

10. The electric bicycle of claim 8 or claim 9, wherein the human machine interface is configured to be used to change the performance attribute, wherein changing the performance attribute requires a restart of the electric bicycle, and wherein changing the performance attribute requires changing the performance attribute within a predetermined period of time after the restart of the electric bicycle.

11. The electric bicycle of any of claims 8-10, wherein the human machine interface is configured to be used to change the performance attribute, and wherein at least one of the human machine interface or the display device is configured to display feedback confirming that a change in the performance attribute was successful.

12. The electric bicycle of any of claims 8-11, wherein the human machine interface is configured to be used to change the performance attribute, and wherein at least one of the human machine interface or the display device is configured to display an error code if the performance attribute fails to display on the display device or if the display device fails to display a currently selected performance attribute.

13. The electric bicycle of any of claims 8-12, wherein the human machine interface is configured to be used to change the performance attribute, and wherein at least one of the human machine interface or the display device is configured to notify a user whether the performance attribute is a legal performance attribute for a geographical location of the electric bicycle.

14. The electric bicycle of any of claims 8-13, wherein the human machine interface is configured to be used to change the performance attribute, and wherein the human machine interface is configured to permit only a select group of users to change the performance attribute.

15. The electric bicycle of any of claims 8-14, wherein the human machine interface is configured to be used to change the performance attribute, and wherein the human machine interface is configured to notify a third party when the performance attribute has been changed or selected.
